# FASCICULE DE BREVET EUROPEEN

(11) **EP 3 410 899 B1**
(45) Date de publication et mention de la délivrance du brevet: **18.12.2019**
(21) Numéro de dépôt: 17707621.3
(22) Date de dépôt: 02.02.2017
(51) Int. Cl.: A47J 31/32, A47J 31/36, A47J 31/38, A47J 31/46

(54) **MACHINE DE DISTRIBUTION DE BOISSONS À PARTIR D'UN POD, AVEC UN SYSTÈME À POMPE DE DOSAGE DE LA QUANTITÉ D'EAU**
MASCHINE ZUR AUSGABE VON GETRÄNKEN AUS EINER KAPSEL MIT EINEM PUMPENSYSTEM ZUR MESSUNG DER WASSERMENGE
MACHINE FOR DISPENSING BEVERAGES FROM A POD, WITH A PUMP SYSTEM FOR METERING THE AMOUNT OF WATER

(30) Priorité: 04.02.2016 FR 1650908
(43) Date de publication de la demande: 12.12.2018
(73) Titulaire: SEB S.A., 69130 Ecully (FR)
(72) Inventeur: RIVA, Arnaud, 21000 Dijon (FR); BRIERE, Matthieu, 21120 Gemeaux (FR); DOS SANTOS, Quentin, 21000 Dijon (FR)
(74) Mandataire: Bourrières, Patrice
(86) Numéro de dépôt international: PCT/FR2017/050239
(87) Numéro de publication internationale: WO 2017/134392

(56) Documents cités:
- EP-A1- 0 231 156
- EP-A1- 2 742 833
- GB-A- 923 748
- US-A- 4 421 014
- US-A1- 2004 000 237

## Description

La présente invention concerne une machine de distribution de boissons à partir d'un pod et a pour objectif principal d'optimiser la distribution des fluides, lors de la préparation d'une boisson.

On entend par « pod » une capsule qui comprend une ou plusieurs cavités contenant chacune un ingrédient entrant dans la composition de la boisson, ces ingrédients étant destinés à être mélangés avec de l'eau lors de la préparation de la boisson.

Dans une réalisation particulière, et non limitative, le pod est constitué d'une capsule comprenant une ou plusieurs cavités contenant chacune un ingrédient, notamment liquide, un canal permettant la distribution d'eau, et une chambre de mélange. Le pod est configuré pour séparer la chambre de mélange de l'au moins une cavité et du canal, dans un mode initial, et pour faire communiquer la chambre de mélange avec l'au moins une cavité et avec le canal, dans un mode de préparation de la boisson. En outre, la machine comprend des moyens d'injection d'air et des moyens d'injection d'eau, configurés pour perforer le pod et pour injecter de l'air et de l'eau respectivement dans l'au moins une cavité et dans le canal, dans le mode de préparation de la boisson. Dans ce mode de préparation, l'air injecté dans l'au moins une cavité pousse l'au moins un ingrédient dans la chambre de mélange et, concomitamment, l'eau injectée dans le canal est transférée dans ladite chambre de mélange, ce qui permet le mélange du ou des ingrédients avec l'eau avant le déversement de la boisson obtenue dans un récipient, par exemple un verre ou un gobelet.

### Etat de la technique

On connait du document EP2742833 une machine de distribution de boissons à partir d'un pod.

Les machines de distribution de boissons à partir d'un pod actuellement connues comprennent un dispositif de distribution d'au moins un volume d'eau déterminé dans le pod. Le dispositif de distribution comporte un réservoir, un circuit de distribution raccordé à son extrémité amont au réservoir, et un système de pompage agencé sur le circuit de distribution. Sur ces machines de distribution, le système de pompage comporte une pompe qui pousse de l'eau jusqu'à l'intérieur du pod. Les technologies actuelles ne permettent pas un dosage précis et reproductible de la quantité d'eau délivrée dans le pod lors de chaque préparation d'une boisson.

### Résumé de l'invention

La présente invention a pour objectif de mettre en œuvre une machine de distribution de boissons à partir d'un pod présentant les caractéristiques précitées de l'art antérieur, avec un système de pompage qui assure un dosage très précis et reproductible lors de chaque préparation d'une boisson avec un type de pod défini.

A cet effet, l'invention concerne une machine de distribution de boissons à partir d'un pod, comprenant un dispositif de distribution d'au moins un volume d'eau déterminé dans le pod selon la revendication 1. Le dispositif de distribution comporte un réservoir, un circuit de distribution raccordé à son extrémité amont au réservoir, et un système de pompage agencé sur le circuit de distribution. Outre ces caractéristiques déjà connues sur les machines de distribution de l'art antérieur, le système de pompage comprend :
- une pompe à eau munie d'une chambre raccordée au circuit de distribution et d'un piston monté coulissant de manière étanche dans la chambre ;
- des moyens d'actionnement du piston de sorte à aspirer au moins un volume d'eau et à refouler ledit au moins un volume d'eau ;
- un premier clapet anti-retour agencé sur le circuit de distribution entre le réservoir et la pompe et
- un second clapet anti-retour agencé sur le circuit de distribution entre la pompe et l'extrémité aval dudit circuit.

Lors de l'actionnement du piston produisant une aspiration de l'eau dans la chambre, les clapets anti-retour garantissent le puisage de l'eau contenu dans le réservoir, sans risque d'aspirer du fluide depuis la sortie du circuit de distribution. Inversement, lors de l'actionnement du piston produisant un refoulement de l'eau contenue dans la chambre, lesdits clapets anti-retour garantissent une évacuation de l'eau par la sortie du circuit de distribution, sans possibilité d'être refoulée dans le réservoir. En outre, cette conception de la pompe garantit une aspiration et un refoulement précis et reproductibles de la quantité d'eau, lesquels ne peuvent pas être entachés d'une erreur grâce à la présence desdits clapets anti-retour.

Avantageusement, les moyens d'actionnement du piston comportent un moteur. L'utilisation d'un moteur, notamment associé à un systéme vis-écrou, permet de manipuler le piston avec une grande précision de déplacement. Cela contribue à distribuer une quantité d'eau précise et reproductible à chaque fois.

Dans une réalisation de la machine de distribution, les clapets anti-retour comportent un siège, une bille et un ressort. On pourrait envisager d'autres variantes de clapets anti-retour, sans sortir du cadre de l'invention.

De préférence, le dispositif de distribution comprend un système de détection de la position du piston dans la chambre. Ce système de détection est configuré pour agir sur les moyens d'actionnement, de sorte que la pompe à eau puisse aspirer et refouler au moins deux volumes d'eau. Cela permet de distribuer précisément au moins deux quantités d'eau pour la préparation de deux boissons à partir de deux types de pod contenant des ingrédients différents ou des quantités différentes.

Selon l'invention, le dispositif de distribution d'eau comprend un système de purge d'un volume d'eau contenu dans le circuit de distribution à l'aval du premier clapet anti-retour. Cela permet d'éviter la présence d'eau résiduelle stagnante pendant un temps plus ou moins prolongé dans le circuit de distribution, entre deux préparations de boissons, afin de délivrer une boisson de qualité à chaque distribution en respectant une bonne hygiène alimentaire.

Dans une réalisation, le système de purge comprend une pompe à air raccordée en aval du premier clapet anti-retour et permettant d'injecter de l'air dans le circuit de distribution. Ce système de purge comprend aussi un clapet calibré configuré pour être maintenu fermé lors d'une aspiration de la pompe à eau et pour être maintenu ouvert lors du fonctionnement de la pompe à air. Le clapet calibré ne s'ouvre qu'au-dessus d'une certaine pression, supérieure à la dépression générée par l'aspiration de la pompe à piston, ce qui garantit l'aspiration d'eau uniquement - et pas d'air - en provenance du réservoir, lors de l'activation de la pompe à eau. Dans une réalisation préférentielle, le clapet calibré comporte un siège, une bille et un ressort. Des variantes restent envisageables sans sortir du cadre de l'invention. Dans une réalisation préférentielle, la pression de calibrage du clapet calibré est comprise entre 100 millibars et 500 millibars.

En la présence d'un système de purge tel que précité, la machine est configurée pour que la pompe à eau refoule un volume d'eau, et le volume d'eau purgé ajouté audit volume d'eau refoulé constituent le volume d'eau permettant la préparation de la boisson. Ainsi, l'eau de purge participe à la préparation de la boisson, ce qui évite un gaspillage d'eau et l'ajout sur la machine d'un bac de récupération des eaux purgées.

La machine de distribution est conçue pour la préparation de boissons à partir d'un pod présentant la conception particulière précitée, ledit pod étant constitué d'une capsule comprenant une ou plusieurs cavités contenant chacune un ingrédient, un canal permettant la distribution d'eau, et une chambre de mélange. Pour cela, la machine de distribution comprend un dispositif d'injection d'au moins un volume d'air dans au moins une cavité du pod, et un circuit de commande configuré pour activer concomitamment le dispositif d'injection et le dispositif de distribution. Cela permet d'assurer un mélange homogène de l'au moins un ingrédient avec l'eau.

Dans une réalisation, le dispositif d'injection est configuré pour délivrer de manière synchronisée deux volumes d'air dans deux cavités du pod. Selon cette réalisation, le dispositif d'injection comprend une pompe à air comportant deux chambres et deux pistons montés coulissants respectivement dans les deux chambres, et des moyens d'actionnement des deux pistons de manière synchronisée. Cette conception permet de délivrer des quantités d'air précises et reproductibles à chaque préparation d'une boisson. Selon cette réalisation, les moyens d'actionnement comprennent au moins un moteur et au moins un élément de transmission, configurés pour manœuvrer concomitamment les deux pistons. L'utilisation d'un moteur, notamment associé à un systéme vis-écrou, permet d'assurer une précision de déplacement des pistons, ce qui contribue à délivrer des quantités d'air précises et reproductibles. De préférence, les deux chambres et les deux pistons sont tous concentriques, ce qui permet de réduire l'encombrement du dispositif d'injection et d'utiliser des moyens d'actionnement simplifiés ne comportant qu'un seul moteur. On pourrait envisager une variante avec des chambres séparées recevant chacune un piston, lesdits pistons étant actionnés concomitamment au moyen d'un seul moteur et d'un élément de transmission adapté, voire au moyen de deux moteurs séparés commandés de manière synchronisée par le circuit de commande de la machine.

Dans une réalisation, le dispositif d'injection comprend deux réservoirs d'air et deux circuits de distribution dont les extrémités amont sont raccordées respectivement aux deux réservoirs. En outre, les deux chambres de la pompe à air sont raccordées respectivement aux deux circuits de distribution. Deux premiers clapets anti-retour sont agencés respectivement sur les deux circuits de distribution entre les réservoirs et la pompe à air. Ces deux premiers clapets anti-retour assurent un écoulement de l'air par les sorties desdits deux circuits de distribution. De préférence, le dispositif d'injection comprend également deux seconds clapets anti-retour agencés respectivement sur les circuits de distribution entre la pompe et les extrémités aval desdits circuits de distribution. Cela permet d'éviter de créer un changement de pression dans les cavités du pod au moment du percement dudit pod par les aiguilles de distribution, du fait de la présence d'air dans les circuits de distribution, ce qui pourrait faire couler prématurément les ingrédients, notamment lorsqu'ils sont liquides, avant la distribution d'eau.

De préférence, l'au moins un volume d'air est supérieur au volume de l'ingrédient contenu dans l'au moins une cavité du pod, de l'ordre de 5% à 20%, de préférence 20%. Cela garantit un écoulement de toute la quantité d'ingrédient contenue dans la cavité en ayant un mélange homogène de la boisson durant sa préparation.

Avantageusement, le circuit de commande est configuré pour activer pendant un temps T1 l'injection d'un volume d'eau puis pendant un temps T2 la purge du circuit, d'une part, et l'injection de l'air dans le pod pendant le temps T1 + T2, d'autre part. Ainsi, le volume d'eau refoulé s'écoule pendant le temps T1 et le volume d'eau purgé s'écoule pendant le temps T2, dans le canal du pod. Et, concomitamment, l'air est injecté dans chaque cavité du pod pendant le temps total T1+T2. Cela garantit une homogénéité du mélange lors de la préparation de la boisson, tout en exploitant le volume d'eau purgé.

### Brève description des figures

La description suivante met en évidence les caractéristiques et avantages de la machine de distribution de boissons objet de l'invention, selon une conception préférentielle et non limitative. Cette description s'appuie sur des figures, parmi lesquelles :
- la figure 1 illustre une vue d'ensemble partielle de la machine de distribution selon l'invention,
- la figure 2 illustre un support d'aiguilles permettant la distribution de fluides dans le pod et la figure 3 illustre ce support d'aiguilles en position engagée sur le pod,
- les figures 4 à 9 illustrent un mode de réalisation non limitatif d'un pod,
- la figure 10 illustre une vue d'ensemble d'une pompe à air du dispositif d'injection d'air et la figure 11 illustre une vue d'ensemble en coupe de ladite pompe à air,
- les figures 12 à 16 illustrent différents composants de la pompe à air illustrée en figures 10 et 11,
- la figure 17 est un schéma de principe du dispositif d'injection d'air mettant en évidence ces différents constituants,
- la figure 18 illustre une vue d'ensemble d'un système de pompage d'eau et la figure 19 illustre une vue d'ensemble en coupe dudit système de pompage,
- la figure 20 illustre le piston de la pompe à eau et le système de détection de la position du piston,
- la figure 21 schématise le dispositif de distribution d'eau dans son ensemble, mettant en évidence ces différents constituants.

### Description détaillée

La machine de distribution 1 de boissons sera dénommée dans la suite de la description «machine 1».

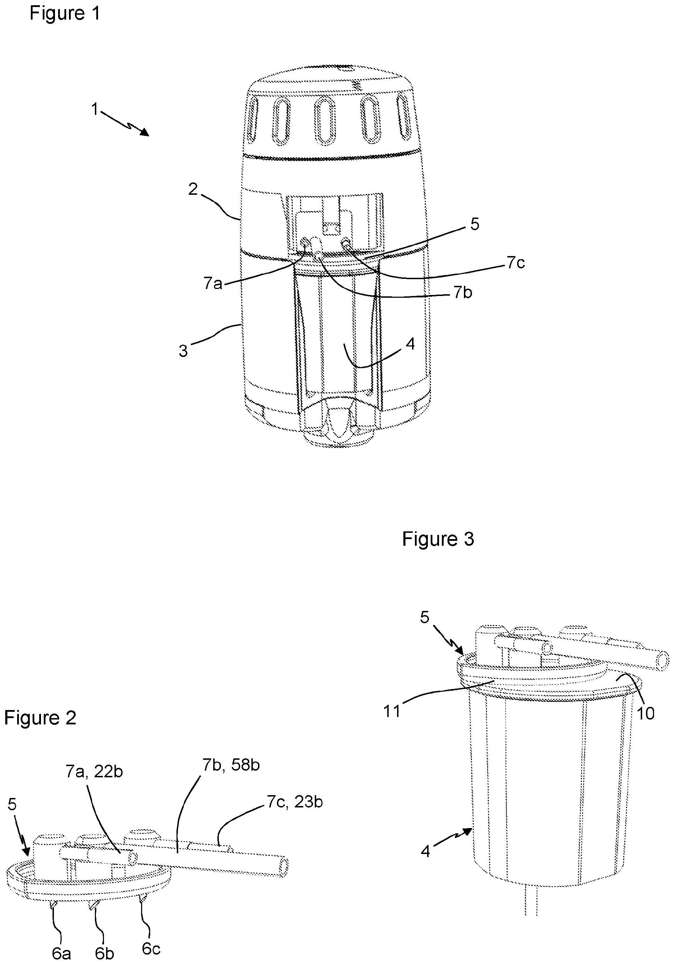

Tel qu'illustré en figure 1, la machine 1 comprend un châssis 2 et un réceptacle 3 permettant la réception d'un pod 4. Le châssis 2 intègre un dispositif de déplacement (non illustré) d'un support d'aiguilles 5 qui peut être engagé sur le pod 4, comme l'illustrent les figures 1 à 3. Le réceptacle 3 est articulé par rapport audit châssis 2 de manière à être disposé soit dans une position ouverte où le pod 4 peut être inséré dans le réceptacle 3, soit dans une position fermée où le support d'aiguilles 5 peut être engagé sur le pod 4.

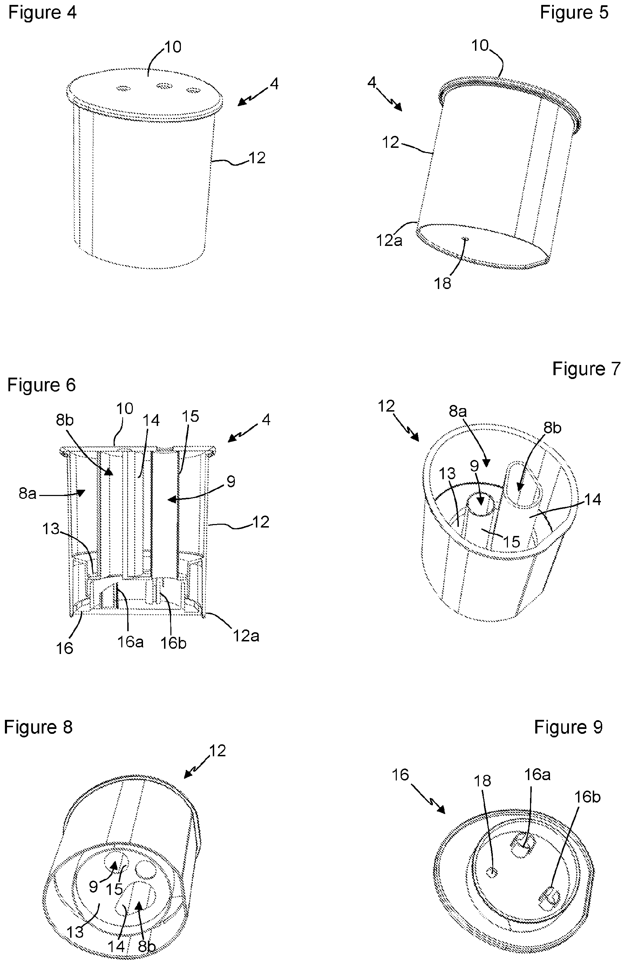

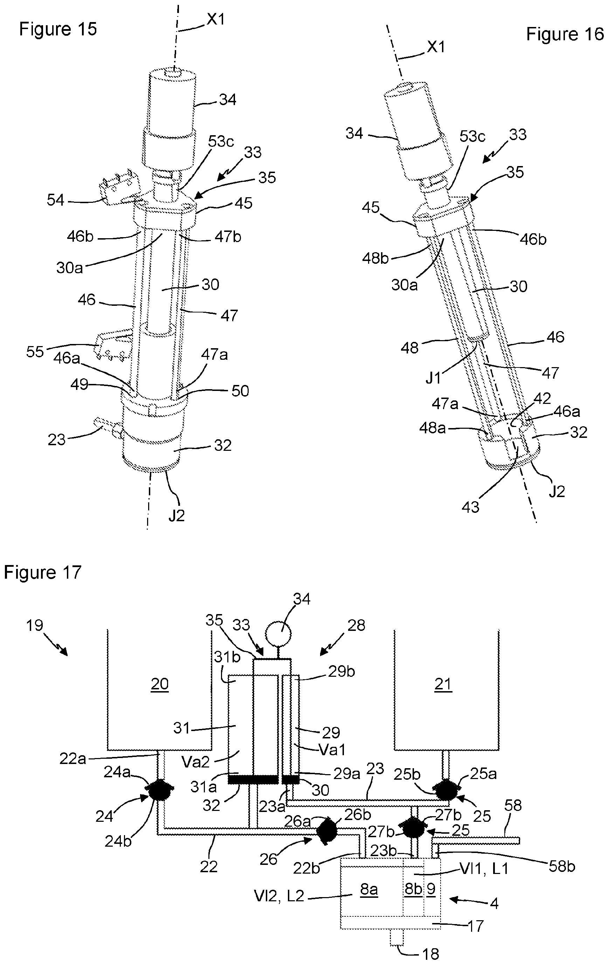

Le support d'aiguilles 5 reçoit trois aiguilles 6a, 6b, 6c connectées à des conduits 7a, 7b, 7c permettant la distribution de fluides. Le nombre d'aiguilles et les types de fluides distribués, notamment de l'air ou de l'eau, dépendent de la conception du pod 4. En l'espèce, la machine 1 est configurée pour recevoir un pod 4 qui comprend deux cavités 8a, 8b contenant chacune un ingrédient L1, L2 (schématisés en figure 17), et un canal 9 de distribution d'eau, tel qu'illustré en figure 7. Lors de l'engagement du support d'aiguilles 5 sur le pod 4, les aiguilles 6a, 6b, 6c perforent l'opercule 10 du pod 4, illustré en figure 4, et se positionnent respectivement dans les parties supérieures des deux cavités 8a, 8b et du canal 9.

Tel que l'illustre la figure 3, un joint d'étanchéité 11 surfacique est agencé sur la face inférieure du support d'aiguilles 5, lesdites aiguilles 6a, 6b, 6c passant au travers dudit joint d'étanchéité 11. Lorsque le support d'aiguilles 5 est en position engagée sur le pod 4, ce joint d'étanchéité 11 vient convenablement en contact sur la surface de l'opercule 10 du pod 4, ce qui supprime la mise à l'air libre des cavités 8a, 8b et du canal 9 du pod 4 après perforation de cet opercule 10 par les aiguilles 6a, 6b, 6c et durant l'injection des fluides à l'intérieur dudit pod 4. Cela permet de garantir une parfaite maîtrise des volumes des fluides injectés dans le pod 4.

Tel qu'illustré en figures 4 à 9, le pod 4 comprend un corps 12 comportant une surface intermédiaire 13 et des parois 14, 15 permettant de définir les deux cavités 8a, 8b et le canal 9. La surface intermédiaire 13 est recouverte par un film (non représenté sur les figures) de fermeture des cavités 8a, 8b. Le pod 4 comprend également un fond mobile 16 agencé de manière coulissante dans le corps 12, en-dessous de la surface intermédiaire 13. Le fond mobile comprend deux aiguilles 16a, 16b. Durant la mise en place du support d'aiguilles 5 sur l'opercule 10 du pod 4, le fond mobile 16 coulisse dans le corps 12 jusqu'à atteindre la surface intermédiaire 13. Les aiguilles 16a, 16b perforent le film, ce qui permet l'activation du pod 4 et la constitution d'une chambre de mélange 17 (schématisée en figure 17) entre le dessous du fond mobile 16 et la paroi 13. Cette chambre de mélange 17 communique avec les deux cavités 8a, 8b et le canal 9, ce qui permet de distribuer les ingrédients et l'eau dans cette chambre de mélange 17, lors de la distribution des fluides pour la préparation de la boisson, laquelle s'écoule progressivement au travers d'un orifice de sortie 18 agencé dans le fond mobile 16. D'autres conceptions de pod 4 sont envisageables sur un principe de fonctionnement équivalent.

La position des aiguilles 6a, 6b, 6c sur le support d'aiguilles 5 dépendra de la configuration du pod 4 et de la position des cavités 8a, 8b et du canal 9 à l'intérieur de du corps 12. Dans la suite de la description, on considère que les aiguilles 6a, 6c pénètrent respectivement dans les cavités 8a, 8b et que l'aiguille 6b pénètre dans le canal 9.

Les aiguilles 6a, 6c permettent l'injection d'air dans les cavités 8a, 8b qui renferment chacune un ingrédient L1, L2. Cette injection d'air est réalisée au moyen d'un dispositif d'injection 19 d'air schématisé en figure 17. Le dispositif d'injection 19 d'air comprend deux réservoirs 20, 21 contenant chacun de l'air, et deux circuits de distribution 22, 23 dont les extrémités amont 22a, 23a sont respectivement raccordées sur les réservoirs 20, 21, et dont les extrémités aval 22b, 23b sont respectivement raccordées sur les conduits 7a, 7c connectés auxdites aiguilles 6a, 6c. Le dispositif d'injection 19 d'air comprend deux premiers clapets anti-retour 24, 25 qui sont agencés respectivement au niveau des extrémités amont 22a, 23a sur les circuits de distribution 22, 23. De même, le dispositif d'injection 19 d'air comprend deux seconds clapets anti-retour 26, 27 qui sont agencés respectivement au niveau des extrémités aval 22b, 23b sur les circuits de distribution 22, 23. Ces premiers et seconds clapets anti-retour 24 - 27 comportent chacun un siège 24a - 27a, une bille 24b - 27b et un élément ressort (non illustré), et sont très sensibles afin de s'ouvrir et de se fermer très rapidement, de sorte à contrôler parfaitement les quantités d'air injectées dans les cavités 8a, 8b sur le pod 4.

Tel que schématisé sur la figure 17, le dispositif d'injection 19 d'air comprend une pompe à air 28 qui comprend une première chambre 29 recevant à coulissement un premier piston 30 et une seconde chambre 31 recevant à coulissement un second piston 32. Les deux pistons 30, 32 sont déplacés simultanément dans les chambres 29, 31 respectives grâce à des moyens d'actionnement 33 comprenant un moteur 34 et un élément de transmission 35 assujetti aux deux pistons 30, 32. La première chambre 29 est raccordée sur le circuit de distribution 23, entre les clapets anti-retour 25, 27, comme schématisé en figure 17. De même, la seconde chambre 31 est raccordée sur le circuit de distribution 22, entre les clapets anti-retour 24, 26, comme schématisé en figure 17. En position initiale, les pistons 30, 32 sont disposés dans les fonds 29a, 31a des chambres 29, 31, lesquelles sont vides. Lors de l'activation des moyens d'actionnement 33, les pistons 30, 32 se déplacent simultanément dans le haut 29b, 31b des chambres 29, 31, ce qui ouvre les premiers clapets anti-retour 24, 25 et remplit les chambres 29, 31 en air. La présence des seconds clapets anti-retour 26, 27 empêche l'air et les ingrédients présents dans les cavités 8a, 8b d'être aspirés dans lesdites chambre 29, 31. Cela permet avantageusement de réaliser l'opération de remplissage en air des chambres 29, 31 concomitamment à l'engagement du support d'aiguilles 5 sur le pod 4, voire après ledit engagement. Lors du lancement de la préparation de la boisson, les moyens d'actionnement 33 déplacent simultanément les pistons 30, 32 dans les fonds 29a, 31a des chambres 29, 31, ce qui ouvre les seconds clapets anti-retour 26, 27 et injecte l'air en parties supérieures des cavités 8a, 8b, permettant alors le transfert simultané des ingrédients dans la chambre de mélange 17. Tandis que les premiers clapets anti-retour 24, 25 empêchent la remontée de l'air dans les réservoirs 20, 21 durant la descente des pistons 30, 32. Les volumes d'air Va1, Va2 expulsés des chambres 29, 31 sont proportionnels aux volumes des ingrédients VI1, VI2 contenus dans les cavités 8a, 8b. Ces volumes d'air Va1, Va2 sont supérieurs aux volumes des ingrédients VI1, VI2 de l'ordre de 5% à 20%, de préférence 20%. Cela assure l'expulsion de toutes les quantités des ingrédients contenus dans les cavités 8a, 8b.

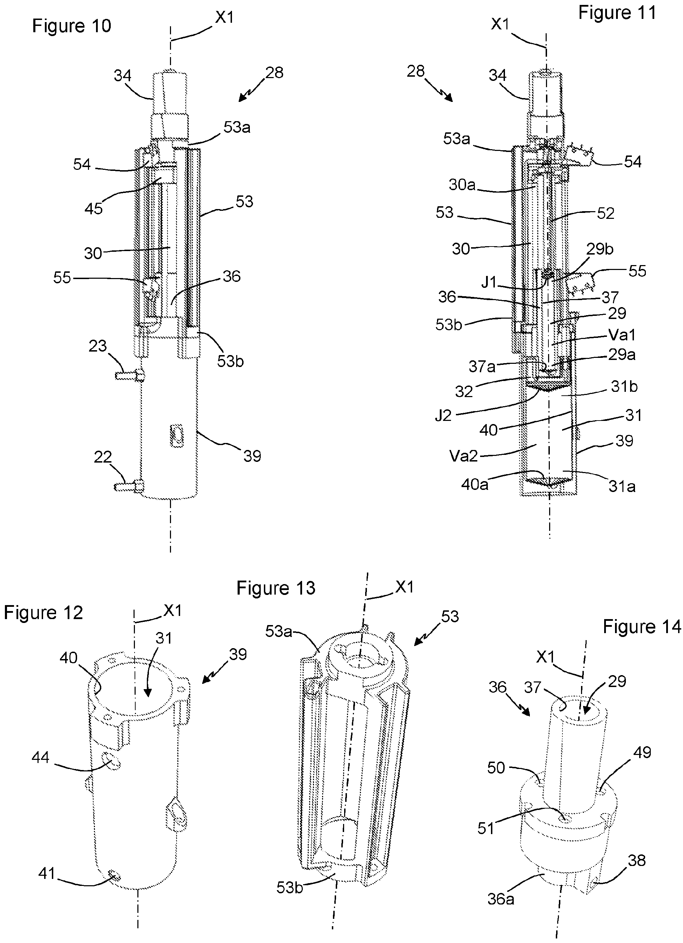

Les figures 10 à 16 illustrent en détail une mise en œuvre préférentielle de la pompe à air 28. Une première pièce 36 comporte un alésage 37 définissant la première chambre 29, comme l'illustrent les figures 11 et 14. Le fond 37a de cet alésage 37 comporte un orifice débouchant 38 sur lequel est raccordé le circuit de distribution 23, comme l'illustrent les figures 10, 14 et 15. Le piston 30 est monté coulissant dans cet alésage 37, de manière étanche grâce à un premier joint J1. Une seconde pièce 39 comporte également un alésage 40 définissant la seconde chambre 31, comme l'illustrent les figures 11 et 12. Le fond 40a de cet alésage 40 comporte également un orifice débouchant 41 sur lequel est raccordé le circuit de distribution 22, comme l'illustre la figure 10. Le piston 32 est monté coulissant dans cet alésage, de manière étanche grâce à un second joint J2. Tel qu'illustré en figure 16, ce piston 32 comprend un alésage 42 et une encoche 43 qui permettent le logement du piston 32 dans l'extrémité inférieure 36a de la première pièce 36 en positionnant l'orifice débouchant 38 dans l'encoche 43, lorsque le piston 32 est en position haute dans la seconde chambre 31, comme illustré en figure 11. La première pièce 36 et la seconde pièce 39 sont fixes entre elles, l'orifice débouchant 38 de la première pièce 36 correspondant avec un second orifice débouchant 44 agencé en partie supérieure 39a de la seconde pièce 39, tel qu'illustré en figure 12, afin de permettre le passage du circuit de distribution 23 pour son raccordement sur l'orifice débouchant 38 de la première pièce 36. Tel que l'illustre notamment la figure 11, les deux chambres 29, 31 et les deux pistons 30, 32 sont tous coaxiaux entre eux, selon un axe longitudinal X1.

L'élément de transmission 35 comprend une pièce de support 45 qui est assujettie à l'extrémité supérieure 30a du piston 30. L'élément de transmission 35 comprend également trois tiges 46, 47, 48 montées en liaison glissière selon l'axe longitudinal X1 par rapport à la première pièce 36 qui comporte pour cela trois trous 49, 50, 51 de passage des tiges 46, 47, 48, comme illustré en regard des figures 14 à 16. Les trois tiges 46, 47, 48 et les trois trous 49, 50, 51 sont uniformément répartis autour de l'axe longitudinal X1. Les extrémités inférieures 46a, 47a, 48a des trois tiges 46, 47, 48 sont fixées au piston 32, et les extrémités supérieures 46b, 47b, 48b desdites tiges sont fixées à la pièce de support 45, tel qu'illustré en figures 15 et 16. L'élément de transmission 35 comprend également une vis sans fin 52, illustrée en figure 11, qui est entraînée en rotation selon l'axe longitudinal X1 par le moteur 34, lesdits éléments étant agencés selon cet axe longitudinal X1 avec les autres pièces de l'élément de transmission 35, de manière coaxiale aux chambres 29, 31 et aux pistons 30, 32. La pièce de support 45 comporte un taraudage (non illustré en détail). La pompe à air 28 comprend également une cage 53, illustrée en figure 13, qui est fixée au-dessus de la seconde pièce 39 en s'étendant selon l'axe longitudinal X1. Le moteur 34 et la vis sans fin 52 sont montés en partie supérieure 53a de cette cage 53. La vis sans fin 52 est guidée en rotation dans un palier 53c agencé en partie supérieure 53a. Ainsi, l'actionnement du moteur 34 permet d'entraîner en rotation la vis sans fin 52, ce qui engendre la translation de la pièce de support 45 et des tiges 46, 47, 48 selon l'axe longitudinal X1, dans un sens ou dans l'autre en fonction du sens de rotation du moteur 34. Par conséquent, les pistons 30 et 32 se déplacent respectivement dans les chambres 29 et 31, simultanément.

Les dimensions des alésages 37, 40 sur les première et seconde pièces 36, 39 et la course des pistons 30, 32 dans ces alésages 37, 40 sont déterminées pour permettre le remplissage de deux volumes d'air Va1, Va2 dans les chambres 29, 31, qui sont supérieurs de l'ordre de 5% à 20%, de préférence 20%, par rapport aux volumes VI1, VI2 d'ingrédients contenus dans les cavités 8a, 8b du pod 4, comme expliqué précédemment.

Tel qu'illustré sur les figures 10, 11 et 15, deux capteurs 54, 55 sont agencés en partie supérieure 53a et en partie inférieure 53b de la cage 53, de manière à ce que la pièce de support 45 vienne en appui sur ces capteurs 54, 55 lorsque les pistons 30, 32 arrivent respectivement dans le haut 29b, 31b et dans le fond 29a, 31a des chambres 29, 31, ce qui correspond au remplissage en air des chambres 29, 31 et au refoulement total de cet air. Ces capteurs 54, 55 sont par exemple constitués de capteurs à lamelle. La machine 1 comprend un circuit de commande (non ilustré) qui active le moteur 34 en fonction du déclenchement de ces capteurs 54, 55, comme cela sera expliqué ensuite.

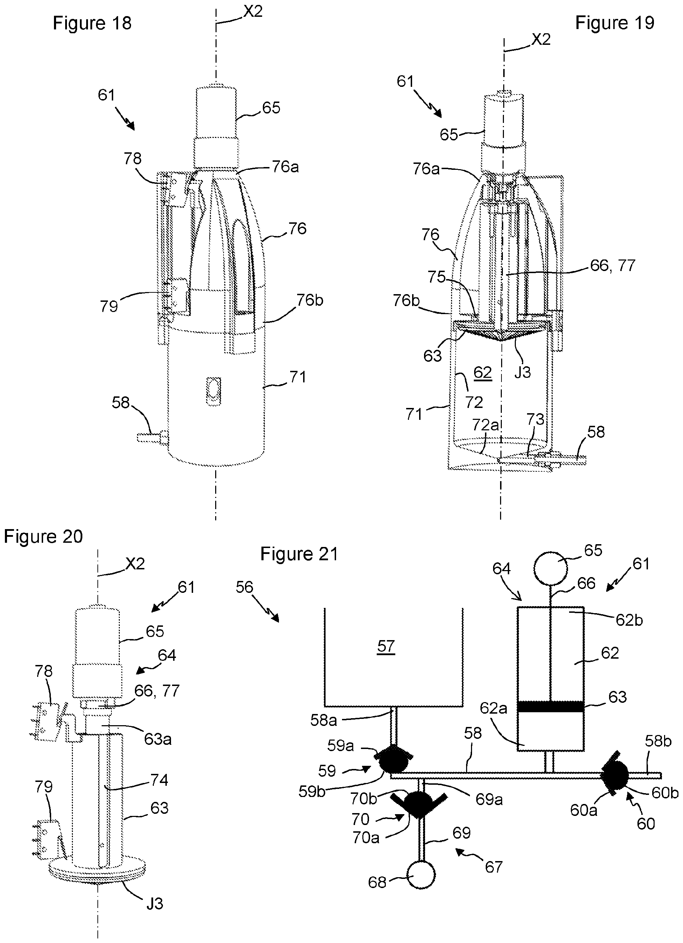

L'aiguille 6b sur le support d'aiguilles 5 permet l'injection d'eau dans le canal 9 du pod 4. Cette injection d'eau est réalisée au moyen d'un dispositif de distribution 56 d'eau, schématisé en figure 21. Le dispositif de distribution 56 comprend un réservoir 57 contenant de l'eau, et un circuit de distribution 58 dont l'extrémité amont 58a est raccordée sur le réservoir 57 et dont l'extrémité aval 58b est raccordée sur le conduit 7b connecté à cette aiguille 6b. Le dispositif de distribution 56 comprend un premier clapet anti-retour 59 qui est agencé au niveau de l'extrémité amont 58a sur le circuit de distribution 58. De même, le dispositif de distribution 56 comprend un second clapet anti-retour 60 qui est agencé au niveau de l'extrémité aval 58b sur le circuit de distribution 58. Ces premier et second clapets anti-retour 59, 60 comportent chacun un siège 59a, 60a, une bille 59b, 60b et un élément ressort (non illustré), et sont très sensibles afin de s'ouvrir et de se fermer très rapidement, de sorte à contrôler parfaitement la quantité d'eau injectée dans le canal 9 sur le pod 4.

Tel que schématisé sur la figure 21, le dispositif de distribution 56 comprend une pompe à eau 61 qui comprend une chambre 62 recevant à coulissement un piston 63. Le piston 63 coulisse de manière étanche dans la chambre 62, grâce à un troisième joint J3. Le piston 63 est déplacé dans la chambre 62 grâce à des moyens d'actionnement 64 comprenant un moteur 65 et un élément de transmission 66 assujetti au piston 63. La chambre 62 est raccordée sur le circuit de distribution 58, entre les clapets anti-retour 59, 60, comme schématisé en figure 21. En position initiale, le piston 63 est disposé dans le fond 62a de la chambre 62, laquelle est vide. Lors de l'activation des moyens d'actionnement 64, le piston 63 se déplace dans le haut 62b de la chambre 60, ce qui ouvre le premier clapet anti-retour 59 et remplit la chambre 62 en eau qui est puisée du réservoir 57. La présence du second clapet anti-retour 60 empêche l'air ambiant ou l'air présent dans le canal 9 du pod 4 d'être aspiré dans la chambre 62. Lors du lancement de la préparation de la boisson, les moyens d'actionnement 64 déplacent le piston 63 dans le fond 62a de la chambre 62, ce qui refoule l'eau dans le circuit de distribution 58 et ouvre le second clapet anti-retour 60, injectant alors l'eau dans le canal 9 par le biais de l'aiguille 6b. Tandis que le premier clapet anti-retour 59 empêche la remontée de l'eau refoulée vers le réservoir 57 durant la descente du piston 63.

Tel que schématisé sur la figure 21, le dispositif de distribution 56 comprend un système de purge 67 qui comprend une pompe à air 68 raccordée par le biais d'un conduit 69 en aval du premier clapet anti-retour 59 sur le circuit de distribution 58. Un clapet anti-retour calibré 70 est agencé au niveau de l'extrémité aval 69a du conduit 69. Ce clapet anti-retour calibré 70 comprend également un siège 70a, une bille 70b et un élément ressort (non illustré) qui est dimensionné pour que la pression de calibrage soit comprise entre 100 millibars et 500 millibars, ce qui garantit l'ouverture dudit clapet 70 uniquement lors de l'activation de la pompe à air 68, et non lors d'une dépression générée par l'aspiration d'eau dans la chambre 62 de la pompe à eau 61. Après que la pompe à eau 61 ait refoulé l'eau dans le circuit de distribution 58 et injecté cette eau refoulée dans le canal 9 du pod, le piston 63 est positionné dans le fond 62a de la chambre 62. De l'eau résiduelle demeure cependant dans le circuit de distribution 58, entre les deux clapets anti-retour 59, 60. Le système de purge 67 est activé juste à la fin de l'étape de refoulement de l'eau par la pompe à eau 61, ce qui permet d'injecter de l'air dans le circuit de distribution 58 entre les deux clapets anti-retour 59, 60 et de chasser cette eau résiduelle par l'extrémité aval 58b du circuit de distribution 58. Cette eau résiduelle est alors également injectée dans le canal 9 du pod 4, en complément de l'eau refoulée. Ainsi, le volume d'eau Ve1 injecté dans le canal 9 du pod 4, permettant la préparation de la boisson, correspond au volume d'eau refoulé Ve2 par la pompe à eau 61 et au volume d'eau résiduel purgé Ve3 par le système de purge 67.

Les figures 18 à 20 illustrent en détail une mise en œuvre préférentielle de la pompe à eau 61. Celle-ci comprend une pièce 71 comportant un alésage 72 définissant la chambre 62. Le fond 72a de l'alésage 72 comprend un orifice débouchant 73 sur lequel est raccordé le circuit de distribution 58. Le piston 63, illustré en figures 19 et 20, est monté en liaison glissière selon un axe longitudinal X2 à l'intérieur de l'alésage 72, grâce à des rainures de guidage 74 telles que celle illustrée en figure 20, dans laquelle s'engage une dent 75 agencée sur une cage 76 qui est fixée au-dessus de la pièce 71. De préférence, trois rainures de guidage 74 et trois dents 75 correspondantes et uniformément réparties, sont prévues sur le piston 63 et sur la cage 76. Cette cage 76 reçoit en partie supérieure 76a le moteur 65 et l'élément de transmission 66 qui est constitué d'une vis sans fin 77, laquelle s'étend selon l'axe longitudinal X2 et est assujettie au moteur 65, comme l'illustrent les figures 19 et 20. Le piston 63 comprend une extrémité supérieure 63a munie d'un taraudage (non illustré) permettant son engagement sur la vis sans fin 77. La rotation du moteur 65 dans un sens ou dans l'autre entraine celle de la vis sans fin 77 autour de l'axe longitudinal X2, ce qui se traduit par une translation du piston 63 selon l'axe longitudinal X2, qui se déplace vers le fond 62a ou vers le haut 62b de la chambre 62, selon le sens de rotation du moteur 65.

Tel qu'illustré en figure 18 et 20, deux capteurs 78, 79 sont agencés en partie supérieure 76a et en partie inférieure 76b de la cage 76. Le piston 63 comprend une patte 80 qui vient en appui sur ces capteurs 78, 79 lorsque le piston 63 est disposé dans le haut 62b ou, au contraire, dans le fond 62a de la chambre 62. La position de réglage de ces capteurs 78, 79 sur la cage 76 dépend donc de la course du piston 63 dans l'alésage 72 de la pièce 71. Ces capteurs 78, 79 sont par exemple des capteurs à lamelle. Cette conception permet le remplissage et le refoulement d'un seul volume d'eau Ve2 par la pompe à eau 61. On peut cependant envisager une variante de conception comportant un troisième capteur (non illustré) agencé entre les deux capteurs 78, 79 et permettant de détecter une position intermédiaire du piston 63 dans la chambre 62, ce qui permet alors le remplissage et le refoulement de deux volumes d'eau Ve2a, Ve2b et, ainsi, une fois le volume d'eau résiduel Ve3 purgé, l'injection de deux volumes d'eau Ve1a et Ve2a dans le canal 9 du pod 4. D'autres variantes sont envisageables, avec plusieurs capteurs agencés entre les deux capteurs 78, 79, selon le nombre souhaité de volumes d'eau à injecter.

La machine 1 comprend également un circuit de commande (non illustré) qui gère notamment l'activation du moteur 34 sur le dispositif d'injection 19 d'air, et le moteur 65 et la pompe à air 68 sur le dispositif de distribution 56 d'eau, en fonction des informations reçues par les capteurs 54, 55 sur la pompe à air 28 du dispositif d'injection 19 d'air et par les capteurs 78, 79 sur la pompe à eau 61. Le circuit de commande active les moteurs 34 et 65 pour effectuer respectivement le remplissage en air des chambres 29 et 31 sur la pompe à air 28 et le remplissage en eau de la chambre 62 sur la pompe à eau 61. Le remplissage en eau tiendra compte du type de pod 4, lorsque le remplissage d'au moins deux volumes d'eau Ve2a, Ve2b est possible sur la machine 1, comme expliqué précédemment. Une fois les remplissages en air et en eau effectués, le circuit de commande active les moteurs 34, 65 en sens inverse pour effectuer simultanément le refoulement de l'air contenu dans les chambres 29, 31 et le refoulement de l'eau contenu dans la chambre 62. Lorsque le piston 63 arrive au fond 62a de la chambre 62 sur la pompe à eau 61, activant le capteur 79, le circuit de commande coupe le moteur 65 et active la pompe à air 68 du système de purge 67, ce qui vide l'eau résiduelle dans le circuit de distribution 58, comme expliqué précédemment. Concomitamment, les pistons 30, 32 poursuivent leurs courses dans les chambres 29, 31 de la pompe à air 28 du dispositif d'injection 19 d'air, jusqu'à ce que le capteur 55 soit activé, le circuit de commande coupant alors le moteur 34 et la pompe à air 68.

Les vitesses de déplacement des pistons 30, 32 sur la pompe à air 28 et celle du piston 63 sur la pompe à eau 61, ainsi que les courses de ces pistons 30, 32, 63, conditionnent les durées d'activation des moteur 34, 65. De même, le volume d'eau résiduel Ve3 à purger conditionne la durée d'activation de la pompe à air 68 du système de purge 67. L'ensemble des paramètres sont adaptés pour activer le moteur 65 de la pompe à eau 61 pendant un temps T1 puis pour activer la pompe à air 68 pendant un temps T2, et pour activer simultanément le moteur 34 de la pompe à air 28 pendant un temps T1+T2. Cela garantit un écoulement des ingrédients et de l'eau dans la chambre de mélange 17 sur le pod 4 de manière synchronisée, assurant un écoulement d'une boisson homogène en sortie du pod 4.

La description qui précède n'a aucun caractère limitatif, de nombreuses variantes pouvant être envisagées sans sortir du cadre de l'invention. On pourra par exemple prévoir des variantes de mise en œuvre du dispositif d'injection 19 d'air, notamment concernant la conception de la pompe à air 28. La conception de la pompe à air 28 dépendra en particulier du nombre de cavités présentes sur le pod 4. Le nombre d'aiguilles sera aussi adapté, selon le type de pod 4 pouvant être utilisé pour la préparation de boissons et le nombre de cavités contenant des ingrédients. Dans ce cas, le dispositif d'injection 19 d'air sera adapté pour comporter autant de chambres recevant chacun un piston, les pistons étant actionnés simultanément, les volumes des chambres étant adaptés en fonction des volumes des ingrédients dans chacune des cavités du pod 4.

On peut aussi prévoir un agencement différent des chambres 29, 31 et des pistons 30, 32 du dispositif d'injection 19 d'air, tout en prévoyant un déplacement simultané de ces piston 30, 32.

On pourrait aussi prévoir une variante du dispositif d'injection 19 d'air, sur laquelle les réservoirs d'air 20, 21 seraient supprimés, les extrémités amont 22a, 23a des circuits de distribution 22, 23 étant laissé en contact du milieu ambiant dans lequel l'air est puisé pour le remplissage des chambres 29, 31.

On peut aussi prévoir un dispositif d'injection 19 d'air ne comportant qu'un seul piston et qu'une seule chambre, lorsque le pod comporte une seule cavité contenant un ingrédient. On assurera dans ce cas également la synchronisation de l'injection d'air et de la distribution de l'eau, dans le pod 4 grâce au circuit de commande sur la machine 1.

L'ensemble du châssis 2 n'est pas représenté sur la figure 1. Le châssis 2 comporte cependant un volume complémentaire permettant l'intégration du dispositif de distribution 56 d'eau et du dispositif d'injection 19 d'air.

Dans un mode de réalisation, la machine 1 permet la préparation de boissons froides. On peut cependant envisager des variantes de réalisation pour la préparation de boissons chaudes, la machine 1 étant dans ce cas équipée d'un dispositif de production d'eau chaude chauffant l'eau préalablement à sa distribution.

## Revendications

1. Machine (1) de distribution de boissons à partir d'un pod (4), comprenant un dispositif de distribution (56) d'au moins un volume d'eau (Ve1) déterminé dans le pod, qui comporte un réservoir (57), un circuit de distribution (58) raccordé à son extrémité amont (58a) au réservoir, et un système de pompage agencé sur le circuit de distribution, le système de pompage comprenant :
- une pompe à eau (61) munie d'une chambre (62) raccordée au circuit de distribution (58), et d'un piston (63) monté coulissant de manière étanche dans la chambre,
- des moyens d'actionnement (64) du piston de sorte à aspirer au moins un volume d'eau (Ve1) et à refouler ledit au moins un volume d'eau (Ve1),
- un premier clapet anti-retour (59) agencé sur le circuit de distribution entre le réservoir et la pompe, et
- un second clapet anti-retour (60) agencé sur le circuit de distribution entre la pompe et l'extrémité aval dudit circuit,
**caractérisée en ce que** le dispositif de distribution d'eau (56) comprend un système de purge (67) d'un volume d'eau (Ve3) contenu dans le circuit de distribution (58) à l'aval du premier clapet antiretour (59).

2. Machine (1) selon la revendication 1, dans laquelle les moyens d'actionnement (64) du piston (63) comportent un moteur (65).

3. Machine (1) selon l'une des revendications précédentes, dans laquelle les clapets anti-retour (59, 60) comportent un siège (59a, 60a), une bille (59b, 60b) et un ressort.

4. Machine (1) selon l'une des revendications précédentes, dans laquelle le dispositif de distribution (56) comprend un système de détection (78, 79) de la position du piston (63) dans la chambre (62) configuré pour agir sur les moyens d'actionnement (64), de sorte que la pompe à eau (61) puisse aspirer et refouler au moins deux volumes d'eau (Ve1a, Ve1b).

5. Machine (1) selon l'une des revendications précédentes, dans laquelle le système de purge (67) comprend une pompe à air (68) raccordée en aval du premier clapet anti-retour (59) et permettant d'injecter de l'air dans le circuit de distribution (58), et un clapet calibré (70) configuré pour être maintenu fermé lors d'une aspiration de la pompe à eau (61) et pour être maintenu ouvert lors du fonctionnement de la pompe à air (68).

6. Machine (1) selon la revendication 5, dans laquelle le clapet calibré (70) comporte un siège (70a), une bille (70b) et un ressort.

7. Machine (1) selon l'une des revendications 5 ou 6, dans laquelle la pression de calibrage du clapet calibré (70) est comprise entre 100 millibars et 500 millibars.

8. Machine (1) selon l'une des revendications 1 à 7, laquelle est configurée pour que la pompe à eau (61) refoule un volume d'eau (Ve2), et le volume d'eau purgé (Ve3) ajouté au volume d'eau refoulé (Ve2) constituent le volume d'eau (Ve1) permettant la préparation de la boisson.

9. Machine (1) selon l'une des revendications précédentes, laquelle comprend un dispositif d'injection (19) d'air d'au moins un volume d'air (Va1, Va2) dans au moins une cavité (8a, 8b) du pod (4), et un circuit de commande configuré pour activer concomitamment le dispositif d'injection (19) d'air et le dispositif de distribution (56).

10. Machine (1) selon la revendication 9, dans laquelle le dispositif d'injection (19) d'air est configuré pour délivrer de manière synchronisée deux volumes d'air (Va1, Va2) dans deux cavités (8a, 8b) du pod (4).

11. Machine (1) selon la revendication 10, dans laquelle le dispositif d'injection (19) d'air comprend une pompe à air comportant deux chambres (29, 31) et deux pistons (30, 32) montés coulissants respectivement dans les deux chambres, et des moyens d'actionnement (33) des deux pistons de manière synchronisée.

12. Machine (1) selon la revendication 11, dans laquelle les moyens d'actionnement (33) comprennent au moins un moteur (34) et au moins un élément de transmission (35) configurés pour manœuvrer concomitamment les deux pistons (30, 32).

13. Machine (1) selon l'une des revendications 11 ou 12, dans laquelle les deux chambres (29, 31) et les deux pistons (30, 32) sont tous concentriques.

14. Machine (1) selon l'une des revendications 11 à 13, dans laquelle le dispositif d'injection (19) d'air comprend deux réservoirs d'air (20, 21), deux circuits de distribution (22, 23) dont les extrémités amont (22a, 23a) sont raccordées respectivement aux deux réservoirs, les deux chambres (29, 31) de la pompe à air (28) étant raccordées respectivement aux deux circuits de distribution (22, 23), et deux premiers clapets anti-retour (24, 25) agencés respectivement sur les deux circuits de distribution entre les réservoirs (20, 21) et la pompe à air (28).

15. Machine (1) selon la revendication 14, dans laquelle le dispositif d'injection (19) d'air comprend deux seconds clapets anti-retour (26, 27) agencés respectivement sur les circuits de distribution (22, 23) entre la pompe à air (28) et les extrémités aval (22b, 23b) desdits circuits.

16. Machine (1) selon l'une des revendications 9 à 15, dans laquelle l'au moins un volume d'air (Va1, Va2) est supérieur au volume (VI1, VI2) d'un ingrédient contenu dans l'au moins une cavité (8a, 8b) du pod (4), de l'ordre de 5% à 20%, de préférence 20%.

17. Machine (1) selon l'une des revendications 9 à 16 rattachée à la revendication 8, dans laquelle le circuit de commande est configuré pour activer pendant un temps T1 l'injection d'un volume d'eau puis pendant un temps T2 la purge du circuit, d'une part, et l'injection de l'air dans le pod (4) pendant le temps T1 + T2, d'autre part.

## Patentansprüche

1. Maschine (1) zur Abgabe von Getränken aus einem Behälter (4), umfassend eine Vorrichtung (56) zur Abgabe von mindestens einem bestimmten Wasservolumen (Ve1) in den Behälter, der einen Tank (57) aufweist, einen Kreis zur Abgabe (58), der mit seinem stromaufwärtigen Ende (58a) an den Tank angeschlossen ist, und ein Pumpsystem, das an dem Kreis zur Abgabe angeordnet ist, wobei das Pumpsystem umfasst:
- eine Wasserpumpe (61), die mit einer Kammer (62), die an den Kreis zur Abgabe (58) angeschlossen ist, und einem Kolben (63) versehen ist, der dicht verschiebbar in der Kammer angebracht ist;
- Mittel zur Betätigung (64) des Kolbens, um mindestens ein Wasservolumen (Ve1) anzusaugen und das mindestens eine Wasservolumen (Ve1) zu fördern,
- ein erstes Rückschlagventil (59), das an dem Kreis zur Abgabe zwischen dem Tank und der Pumpe angeordnet ist, und
- ein zweites Rückschlagventil (60), das an dem Kreis zur Abgabe zwischen der Pumpe und dem stromabwärtigen Ende des Kreises angeordnet ist,
**dadurch gekennzeichnet, dass** die Vorrichtung zur Abgabe von Wasser (56) ein System zur Leerung (67) eines Wasservolumens (Ve3) umfasst, das in dem Kreis zur Abgabe (58) stromabwärts des ersten Rückschlagventils (59) enthalten ist.

2. Maschine (1) nach Anspruch 1, wobei die Betätigungsmittel (64) des Kolbens (63) einen Motor (65) aufweisen.

3. Maschine (1) nach einem der vorhergehenden Ansprüche, wobei die Rückschlagventile (59, 60) einen Sitz (59a, 60a), eine Kugel (59b, 60b) und eine Feder aufweisen.

4. Maschine (1) nach einem der vorhergehenden Ansprüche, wobei die Vorrichtung zur Abgabe (56) ein System zur Erfassung (78, 79) der Position des Kolbens (63) in der Kammer (62) umfasst, das konfiguriert ist, um auf die Mittel zur Betätigung (64) zu wirken, so dass die Wasserpumpe (61) mindestens zwei Wasservolumen (Vela, Velb) ansaugen und fördern kann.

5. Maschine (1) nach einem der vorhergehenden Ansprüche, wobei das System zur Leerung (67) eine stromabwärts an das erste Rückschlagventil (59) angeschlossene, Luftpumpe (68) zur Injektion von Luft in den Kreis zur Abgabe (58) und ein kalibriertes Ventil (70) umfasst, das konfiguriert ist, um während eines Ansaugens der Wasserpumpe (61) geschlossen und während des Betriebs der Luftpumpe (68) offen gehalten zu werden.

6. Maschine (1) nach Anspruch 5, wobei das kalibrierte Ventil (70) einen Sitz (70a), eine Kugel (70b) und eine Feder aufweist.

7. Maschine (1) nach einem der Ansprüche 5 oder 6, wobei der Kalibrierungsdruck des kalibrierten Ventils (70) zwischen 100 Millibar und 500 Millibar liegt.

8. Maschine (1) nach einem der Ansprüche 1 bis 7, die so konfiguriert ist, dass die Wasserpumpe (61) ein Wasservolumen (Ve2) fördert, und dass das geleerte Wasservolumen (Ve3), das zu dem geförderten Wasservolumen (Ve2) hinzugefügt wird, die Wassermenge (Ve1) darstellt, die die Zubereitung des Getränks ermöglicht.

9. Maschine (1) nach einem der vorhergehenden Ansprüche, die eine Vorrichtung zur Injektion von Luft (19) mindestens eines Luftvolumens (Val, Va2) in mindestens einem Hohlraum (8a, 8b) des Behälters (4) und eine Steuerschaltung umfasst, die konfiguriert ist, um gleichzeitig die Vorrichtung zur Injektion von Luft (19) und die Vorrichtung zur Abgabe (56) zu aktivieren.

10. Maschine (1) nach Anspruch 9, wobei die Vorrichtung zur Injektion von Luft (19) konfiguriert ist, um synchron zwei Luftvolumina (Val, Va2) in zwei Hohlräume (8a, 8b) des Behälters (4) zu liefern.

11. Maschine (1) nach Anspruch 10, wobei die Vorrichtung zur Injektion von Luft (19) eine Luftpumpe umfasst, die zwei Kammern (29, 31) und zwei Kolben (30, 32), die jeweils in den zwei Kammern verschiebbar angebracht sind, und Mittel zur synchronisierten Betätigung (33) der beiden Kolben umfasst.

12. Maschine (1) nach Anspruch 11, wobei die Betätigungsmittel (33) mindestens einen Motor (34) und mindestens ein Übertragungselement (35) umfassen, die konfiguriert sind, um die zwei Kolben (30, 32) gleichzeitig zu manövrieren.

13. Maschine (1) nach einem der Ansprüche 11 oder 12, wobei die zwei Kammern (29, 31) und die zwei Kolben (30, 32) alle konzentrisch sind.

14. Maschine (1) nach einem der Ansprüche 11 bis 13, wobei die Vorrichtung zur Injektion von Luft (19) zwei Lufttanks (20, 21), zwei Kreise zur Abgabe (22, 23), deren stromaufwärtige Enden (22a, 23a) jeweils an die zwei Tanks angeschlossen sind, zwei Kammern (29, 31) der Luftpumpe (28), die jeweils an die zwei Kreise zur Abgabe (22, 23) angeschlossen sind, und zwei erste Rückschlagventile (24, 25) umfasst, die jeweils an den beiden Kreisen zur Abgabe zwischen den Tanks (20, 21) und der Luftpumpe (28) angeordnet sind.

15. Maschine (1) nach Anspruch 14, wobei die Vorrichtung zur Injektion von Luft (19) zwei zweite Rückschlagventile (26, 27) umfasst, die jeweils an den Kreisen zur Abgabe (22, 23) zwischen der Luftpumpe (28) und den stromabwärtigen Enden (22b, 23b) der Kreise angeordnet sind.

16. Maschine (1) nach einem der Ansprüche 9 bis 15, wobei das mindestens eine Luftvolumen (Val, Va2) in der Größenordnung von 5% bis 20%, vorzugsweise 20%, größer als das Volumen (VI1, VI2) eines Bestandteils ist, der in dem mindestens einen Hohlraum (8a, 8b) des Behälters (4) enthalten ist.

17. Maschine (1) nach einem der Ansprüche 9 bis 16, abhängig von Anspruch 8, wobei der Steuerkreis so konfiguriert ist, dass er während einer Zeit T1 das Einspritzen eines Wasservolumens und ferner während einer Zeit T2 die Leerung des Kreises einerseits und die Injektion von Luft in die Behälter (4) während der Zeit T1 + T2 andererseits aktiviert.

## Claims

1. Machine (1) for dispensing drinks from a pod (4), comprising a device for dispensing (56) at least one determined water volume (Ve1) in the pod, which comprises a tank (57), a dispensing circuit (58) connected to the upstream end (58a) thereof at the tank, and a pumping system arranged on the dispensing circuit, the pumping system comprising:
- a water pump (61) equipped with a chamber (62) connected to the dispensing circuit (58), and a piston (63) mounted sliding in a sealed manner in the chamber,
- means for actuating (64) the piston so as to suction at least one water volume (Ve1) and to repel said at least one water volume (Ve1),
- a first non-return valve (59) arranged on the dispensing circuit between the tank and the pump, and
- a second non-return valve (60) arranged on the dispensing circuit between the pump and the downstream end of said circuit,
**characterised in that** the water dispensing device (56) comprises a system for draining (67) a water volume (Ve3) contained in the dispensing circuit (58) downstream from the first non-return valve (59).

2. Machine (1) according to claim 1, wherein the means for actuating (64) the piston (63) comprise a motor (65).

3. Machine (1) according to one of the preceding claims, wherein the non-return valves (59, 60) comprise a seat (59a, 60a), a ball (59b, 60b) and a spring.

4. Machine (1) according to one of the preceding claims, wherein the dispensing device (56) comprises a system for detecting (78, 79) the position of the piston (63) in the chamber (62) configured to act on the actuation means (64), such that the water pump (61) can suction and repel at least two water volumes (Vela, Velb).

5. Machine (1) according to one of the preceding claims, wherein the drain system (67) comprises an air pump (68) connected downstream from the first non-return valve (59) and making it possible to inject air in the dispensing circuit (58), and a calibrated valve (70) configured to be kept closed during a suctioning of the water pump (61) and to be kept open during the functioning of the air pump (68).

6. Machine (1) according to claim 5, wherein the calibrated valve (70) comprises a seat (70a), a ball (70b) and a spring.

7. Machine (1) according to one of claims 5 or 6, wherein the calibrating pressure of the calibrated valve (70) is between 100 millibars and 500 millibars.

8. Machine (1) according to one of claims 1 to 7, which is configured such that the water pump (61) repels a water volume (Ve2), and the drained water volume (Ve3) added to the repelled water volume (Ve2) constitute the water volume (Ve1) making it possible to prepare the drink.

9. Machine (1) according to one of the preceding claims, which comprises a device for injecting (19) air from at least one air volume (Val, Va2) into at least one cavity (8a, 8b) of the pod (4), and a control circuit configured to together activate the air injection device (19) and the dispensing device (56).

10. Machine (1) according to claim 9, wherein the air injection device (19) is configured to deliver, in a synchronised manner, two air volumes (Val, Va2) into two cavities (8a, 8b) of the pod (4).

11. Machine (1) according to claim 10, wherein the air injection device (19) comprises an air pump comprising two chambers (29, 31) and two pistons (30, 32) mounted sliding respectively in the two chambers, and means for actuating (33) the two pistons in a synchronised manner.

12. Machine (1) according to claim 11, wherein the actuation means (33) comprise at least one motor (34) and at least one transmission element (35) configured to together move the two pistons (30, 32).

13. Machine (1) according to one of claims 11 or 12, wherein the two chambers (29, 31) and the two pistons (30, 32) are all concentric.

14. Machine (1) according to one of claims 11 to 13, wherein the air injection device (19) comprises two air tanks (20, 21), two dispensing circuits (22, 23) of which the upstream ends (22a, 23a) are connected respectively to the two tanks, the two chambers (29, 31) of the air pump (28) being connected respectively to the two dispensing circuits (22, 23), and two first non-return valves (24, 25) arranged respectively on the two dispensing circuits between the tanks (20, 21) and the air pump (28).

15. Machine (1) according to claim 14, wherein the air injection device (19) comprises two second non-return valves (26, 27) arranged respectively on the dispensing circuits (22, 23) between the air pump (28) and the downstream ends (22b, 23b) of said circuits.

16. Machine (1) according to one of claims 9 to 15, wherein the at least one air volume (Val, Va2) is greater than the volume (Vl1, Vl2) of an ingredient contained in the at least one cavity (8a, 8b) of the pod (4), of around 5% to 20%, preferably 20%.

17. Machine (1) according to one of claims 9 to 16 attached to claim 8, wherein the control circuit is configured to activate for a time T1 for injecting a water volume then for a time T2 for draining the circuit, on the one hand, and injecting air into the pod (4) for the time T1 + T2, on the other hand.
